# EUROPEAN PATENT SPECIFICATION

(11) **EP 2 612 802 B1**
(45) Date of publication and mention of the grant of the patent: **12.10.2016**
(21) Application number: 13150262.7
(22) Date of filing: 04.01.2013
(51) Int. Cl.: B62D 25/08, B60R 21/34

(54) **Cowl top structure of vehicle**
Windlaufstruktur eines Fahrzeugs
Structure d'auvent de véhicule

(30) Priority: 06.01.2012 JP 2012000945
(43) Date of publication of application: 10.07.2013
(73) Proprietor: Mitsubishi Jidosha Kogyo K.K., Tokyo 108-8410 (JP)
(72) Inventor: Ikuine, Yukiko, Tokyo, Tokyo 108-8410 (JP); Takeuchi, Hideki, Tokyo, Tokyo 108-8410 (JP)
(74) Representative: Vossius & Partner Patentanwälte Rechtsanwälte mbB

(56) References cited:
- DE-A1-102006 029 921

## Description

The present invention relates to a cowl top structure of a vehicle.

As a structure for supporting a front window of a vehicle from below, a cowl top structure has been known. It is desired for the cowl top structure to secure its strength and rigidity, and at the same time, to absorb a shock in the event of collision, for protecting pedestrians (Patent Documents 1 and 2).
(Patent Document 1) JP-A-2010-221879
(Patent Document 2) JP-A-2010-023536

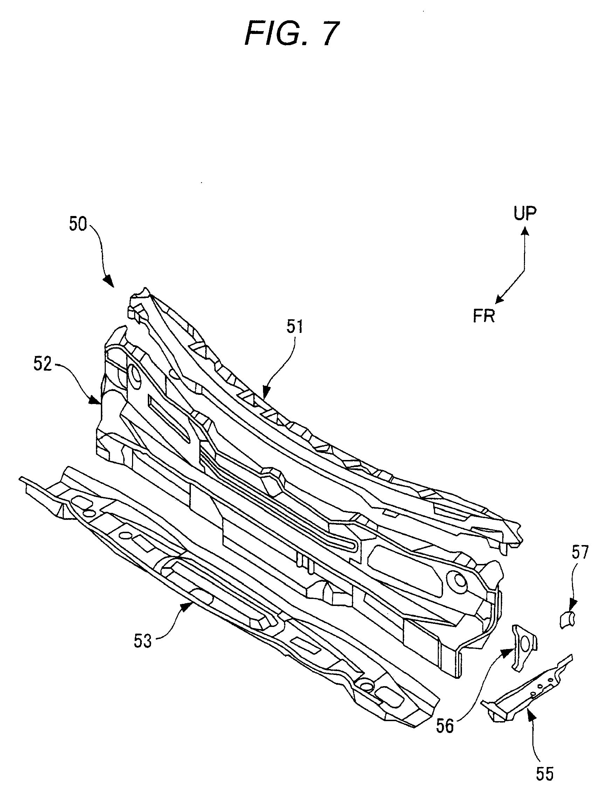

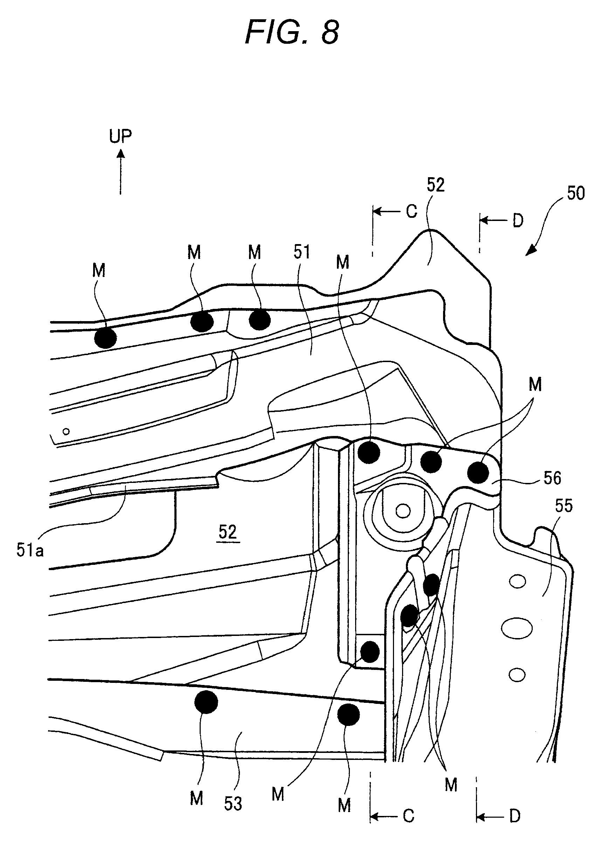

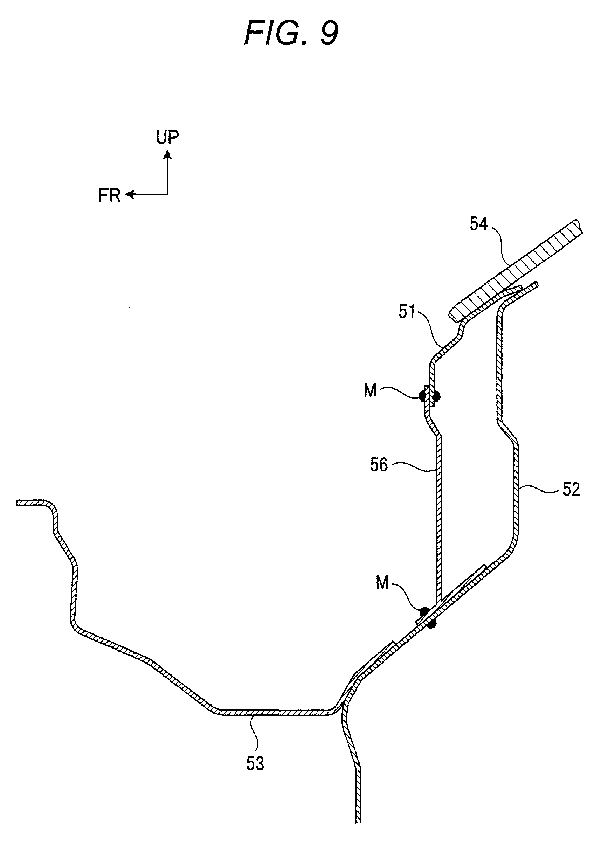

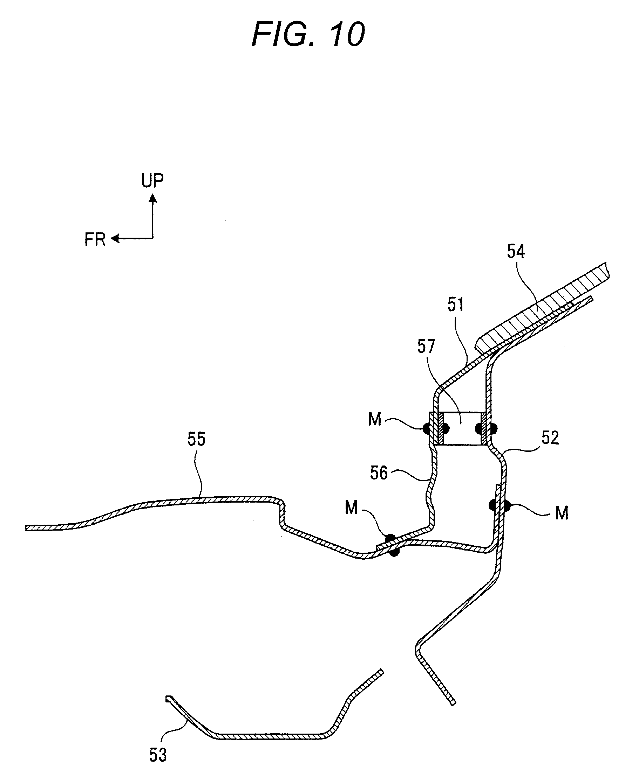

Figs. 7 to 10 show a conventional cowl top structure. Referring to Figs. 7 to 10, problems of the conventional cowl top structure will be described. Herein, Fig. 7 is an exploded perspective view showing constituent members which constitute the conventional cowl top structure, Fig. 8 is a front view showing a right end part of the conventional cowl top structure, as seen from a front side, and Figs. 9 to 10 are sectional views respectively as seen from arrow marks C-C and arrow marks D-D in Fig. 8. It is to be noted that a sign M represents a welding point.

A conventional cowl top structure 50 includes, as its main constituent members, a cowl top upper 51, a cowl top inner 52, and a cowl top lower 53, and the cowl top structure 50 is formed into an open sectional structure in which a front side of a vehicle is opened by combination of these cowl top upper 51, cowl top inner 52, and cowl top lower 53. As the results, the cowl top structure 50 (the cowl top upper 51) is so constructed as to be easily deformed with an input from the above, and its pedestrian protecting performance is enhanced. However, in case where the cowl top structure 50 is formed as the open sectional structure, an entire structure thereof becomes short of strength and rigidity. For this reason, side end parts of the cowl top structure 50 are connected by welding by means of connecting members each including a frame extension 55, a cowl top side 56 and a bulk head 57, and thus, the strength and rigidity of the cowl top structure 50 are secured. Although only the connecting member which is used in a right end part is shown in Fig. 7, the same connecting member (symmetrical in shape) is used in a left end part too, but not shown in the drawing.

Now, referring to Figs. 8 to 10, a structure of the cowl top structure 50 in the right end part will be described. To begin with, the structure will be described referring to a sectional view as seen from arrow marks C-C in Fig. 8.

The cowl top upper 51 which holds a front window 54 on an upper face thereof is welded to an upper end of the cowl top inner 52 at its upper end side, and welded to an upper end of the cowl top side 56 at its lower end side. A lower end of this cowl top side 56 is welded to a middle part of the cowl top inner 52. In a part below a welding point M between the cowl top side 56 and the cowl top inner 52, the cowl top inner 52 and a rear end of the cowl top lower 53 are welded to each other.

In this manner, a closed sectional structure is formed by combination of the cowl top upper 51, the cowl top inner 52, and the cowl top side 56, in the sectional view as seen from the arrow marks C-C, and the strength and rigidity are enhanced. On the other hand, the closed sectional structure is unlikely to be deformed, when an input (a shock) is applied from the above.

In a region inward of the sectional view as seen from the arrow marks C-C, a flange 51a is provided in a front end part of the cowl top upper 51, as shown in Fig. 8. In this inward region, the strength and rigidity of the cowl top upper 51 itself and the cowl top structure 50 are secured by the presence of the flange 51a.

Then, the structure in a sectional view as seen from arrow marks D-D in Fig. 8 will be described. The cowl top upper 51 is welded to the upper end of the cowl top inner 52 at its upper end side, and welded to the upper end of the cowl top side 56 at its lower end side. A lower end of this cowl top side 56 is welded to a frame extension 55, and this frame extension 55 is welded to a middle part of the cowl top inner 52, at its rear end side.

In this manner, in the sectional view as seen from the arrow marks D-D, the closed sectional structure is formed by combination of the cowl top upper 51, the cowl top inner 52, the cowl top side 56, and the frame extension 55. Further, in this closed sectional structure, the bulk head 57 is interposed between the cowl top upper 51 and the cowl top inner 52 so as to interconnect them by welding. As the results, the strength and rigidity are further enhanced as compared with the structure in the sectional view as seen from the arrow marks C-C. Therefore, the structure in this sectional view as seen from the arrow marks D-D is more unlikely to be deformed, when an input (a shock) is applied from the above.

As described above, the cowl top structure 50 which is formed as the open sectional structure is likely to be deformed as a whole, with respect to an input from the above. However, in the side end part, the closed sectional structure is formed by using the cowl top side 56, and further, the bulk head 57 is welded to an inside of the closed sectional structure thereby to reinforce the structure. By employing such a structure, the strength and rigidity of the cowl top structure 50 is secured. However, in case where the rigidity of this side end part is enhanced, the side end part becomes unlikely to be deformed, to the contrary. Therefore, it has been difficult to protect pedestrians, while the strength and rigidity are secured. Moreover, for the purpose of securing the strength and rigidity, the number of components of the connecting member is increased, which incurs an increase of manufacturing cost and an increase of weight of the components.

The invention has been made in view of the above described problems, and an object of the invention is to provide a cowl top structure capable of protecting pedestrians, while its strength and rigidity are secured.

According to the invention there is provided a cowl top structure of a vehicle, the cowl top structure comprising: a cowl top upper which extends in a lateral direction of the vehicle and which is adapted to support a front window; a cowl top lower which extends in the lateral direction and which is arranged at a lower position than the cowl top upper; and a cowl top inner which extends in the lateral direction and which is welded to a rear end of the cowl top upper and a rear end of the cowl top lower, so that the cowl top upper, the cowl top lower and the cowl top inner forms an open sectional structure, characterized in that a width in a vertical direction of the vehicle of each of side end parts of the cowl top upper in the lateral direction is gradually increased toward the outside in the lateral direction, and each of the side end parts is formed with an opening.

An opening width of the opening in the vertical direction may be gradually increased toward the outside in the lateral direction.

A flange may be provided at a front end of the cowl top upper along an entire length thereof in the lateral direction.

A center part of the cowl top upper may be protruded frontward of the vehicle, and a width in a longitudinal direction of the vehicle of each of the side end parts may be gradually decreased toward the outside in the lateral direction.

The width in the longitudinal direction of each of the side end parts may be smaller than a width in the longitudinal direction of the center part of the cowl top upper.

According to an aspect of the invention, the open sectional structure is employed as the cowl top structure, and in both the side end parts of the cowl top upper, the width of the cowl top upper in the vertical direction, as seen from the front side, is gradually increased toward the outside in the lateral direction of the vehicle. Therefore, the rigidity in both the side end parts is enhanced, and thus, the strength and rigidity of the cowl top upper in its entirety can be maintained. On the other hand, because the openings are formed in the respective side end parts, the openings are deformed in the event of an input from the above thereby to absorb a shock. As the results, it is possible to protect pedestrians while the strength and rigidity are secured.

According to an aspect of the invention, the flange is provided on the cowl top upper which constitutes the cowl top structure, along the entire length thereof in the lateral direction of the vehicle. Therefore, it is possible to secure the strength and rigidity of the cowl top structure.

According to an aspect of the invention, the cowl top upper which constitutes the cowl top structure is formed in a shape of a crescent in which the center part is protruded frontward of the vehicle. Therefore, a shock is received in a wide area particularly in the center part of the cowl top upper, and the cowl stop structure can be made more easily deformable.

### BRIEF DESCRIPTION OF THE DRAWINGS

Fig. 1 is an exploded perspective view showing constituent members which constitute a cowl top structure according to the invention.
Fig. 2 is a front view showing a right end part of the cowl top structure according to the invention, as seen from a front side.
Fig. 3 is a sectional view as seen from arrow marks A-A in Fig. 2.
Fig. 4 is a sectional view as seen from arrow marks B-B in Fig. 2.
Fig. 5 is a sectional view of the cowl top structure according to the invention, in a center part of a vehicle.
Fig. 6A is a plan view showing a cowl top upper which constitutes the cowl top structure according to the invention.
Fig. 6B is a front view showing the cowl top upper which constitutes the cowl top structure according to the invention.
Fig. 6C is a side view showing the cowl top upper which constitutes the cowl top structure according to the invention.
Fig. 7 is an exploded perspective view showing constituent members which constitute the conventional cowl top structure.
Fig. 8 is a front view showing a right end part of the conventional cowl top structure, as seen from a front side.
Fig. 9 is a sectional view as seen from arrow marks C-C in Fig. 8.
Fig. 10 is a sectional view as seen from arrow marks D-D in Fig. 8.

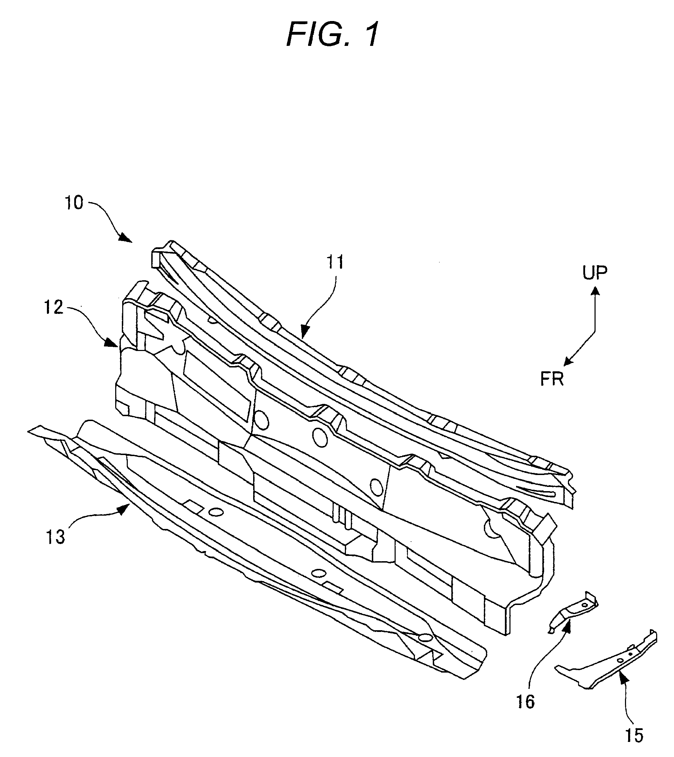

Now, referring to Figs. 1 to 6, the cowl top structure in an embodiment according to the invention will be described.

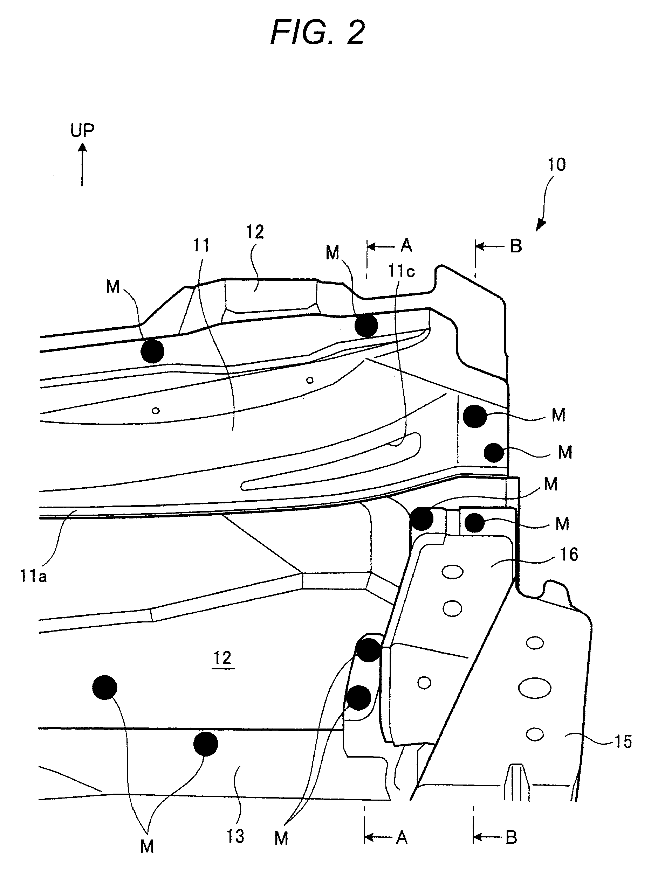

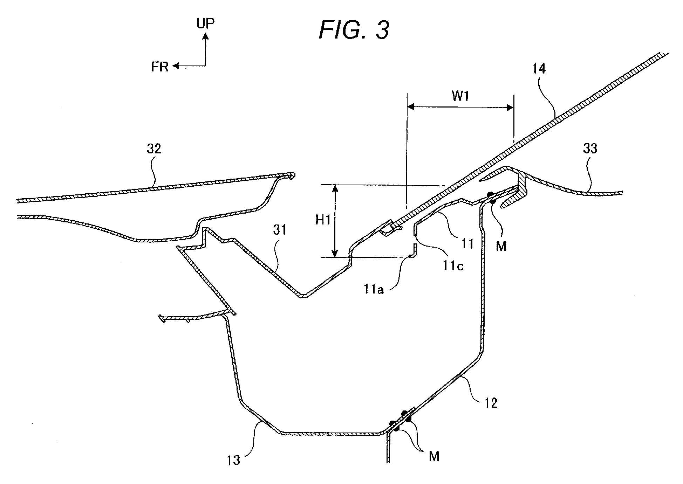

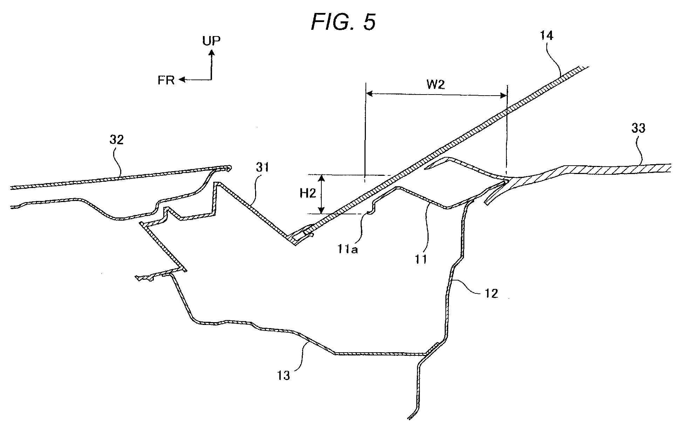

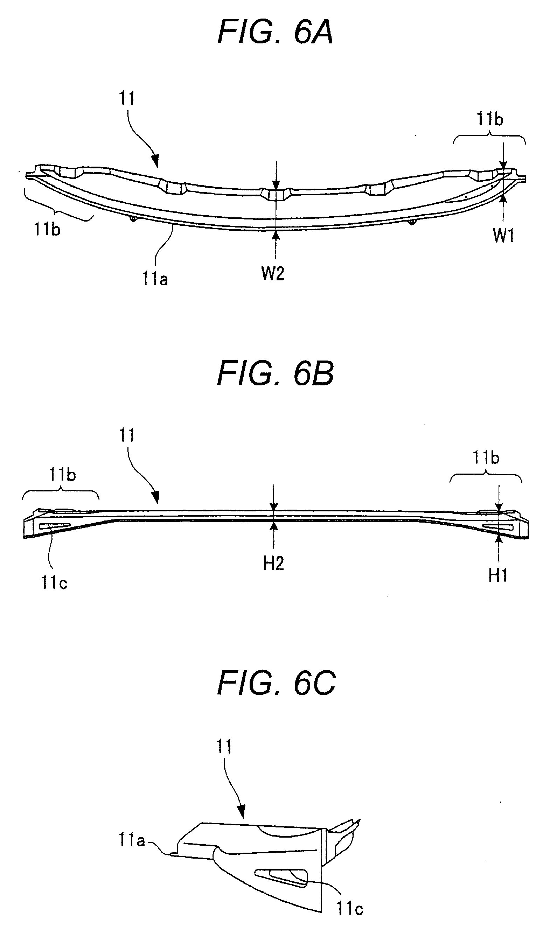

Fig. 1 is an exploded perspective view showing constituent members which constitute the cowl top structure in this embodiment. Fig. 2 is a front view showing a right end part of the cowl top structure in this embodiment, as seen from a front side, and Figs. 3 to 4 are sectional views respectively as seen from arrow marks A-A and arrow marks B-B in Fig. 2. Fig. 5 is a sectional view of the cowl top structure in this embodiment, in a center part of a vehicle. Figs. 6A to 6C are a plan view, a front view and a side view respectively showing a cowl top upper which constitutes the cowl top structure in this embodiment. It is to be noted that a sign M represents a welding point, an arrow mark FR represents a front side of the vehicle, and an arrow mark UP represents an upper side of the vehicle.

A cowl top structure 10 in this embodiment includes, as its main constituent members, a cowl top upper 11, a cowl top inner 12, and a cowl top lower 13 which are provided extending in a lateral direction of a vehicle, in the same manner as in the conventional structure. The cowl top structure 10 is formed into an open sectional structure by combination of these cowl top upper 11, cowl top inner 12 and cowl top lower 13. This cowl top structure 10 is fixed to a dash panel (not shown) which is a structural member of the vehicle, at its lower side.

In the cowl top structure 10 in this embodiment, the cowl top upper 11 and the cowl top inner 12 are directly connected to each other by welding, and the cowl top inner 12 and the cowl top lower 13 are directly connected to each other by welding, in side end parts of these constituent members. Different from the conventional structure, these constituent members are not connected by means of the connecting members.

In this embodiment too, a frame extension 15 and a wiper bracket side 16 are connected to the side end parts of the constituent members. However, these members are not interposed between the constituent members for connecting the constituent members, and hence, do not correspond to the connecting members for the cowl top structure 10 itself. Specifically, the frame extension 15 is a member for connecting the cowl top structure 10 to the other member, and the wire bracket side 16 is a member for mounting a wiper (not shown). It is to be noted that although only the frame extension 15 and the wiper bracket side 16 which are used in the right end part are shown in Fig. 1, the same members (symmetrical in shape) are used in the left end part too, but not shown in this drawing.

A structure of the cowl top structure 10 in this embodiment will be described in detail, referring to Figs. 2 to 6. It is to be noted that although the structure of the cowl top structure 10 in the right end part will be mainly described herein, the left end part has an exactly same structure.

To being with, the structure in a sectional view as seen from arrow marks A-A will be described referring to Fig. 3. The cowl top upper 11 supports a front window 14 which is arranged on an upper face of the cowl top upper 11. A rear end of this cowl top upper 11 is welded to an upper end of the cowl top inner 12 which is arranged more inward of a vehicle room than the cowl top upper 11, but the cowl top upper 11 is not connected to any member, at its front end side. A middle part of the cowl top inner 12 is welded to a rear end of the cowl top lower 13 which is arranged at a lower side of the cowl top upper 11.

As described above, these cowl top upper 11, cowl top inner 12, and cowl top lower 13 are formed into the open sectional structure in the sectional view as seen from the arrow marks A-A, and the cowl top upper 11 is so formed as to be easily deformed, when a shock is inputted to the cowl top structure 10 from the above. The open sectional structure is formed all over the cowl top structure 10 in the lateral direction of the vehicle.

Numeral 31 represents a deck garnish formed of resin for supporting a lower end of the front window 14, and the deck garnish 31 is arranged so as to cover an opening at a front side of the above described open sectional structure. Numeral 32 represents a hood of an engine room, and numeral 33 represents an instrument panel inside the vehicle room.

Further, a shape of the cowl top upper 11 is contrived, so that the strength and rigidity can be secured, and at the same time, pedestrians can be protected. Therefore, the shape of the cowl top upper 11 will be described below, referring to Fig. 6.

A flange 11a is provided in a front end part of the cowl top upper 11 along its entire length (an entire length in the lateral direction of the vehicle), and with this flange 11a, the strength and rigidity of the cowl top upper 11 itself, and further, of the cowl top structure 10 are secured.

Moreover, in side end parts 11b of the cowl top upper 11 at both ends thereof in the lateral direction of the vehicle, a width H1 in a vertical direction as seen from the front (hereinafter referred to as "a vertical width") is gradually increased (enlarged in width), toward the outside in the lateral direction of the vehicle, so that the vertical width H1 is larger than a vertical width H2 in a center part of the cowl top upper 11. According to this structure, the strength and rigidity of the cowl top upper 11 in the side end parts 11b are enhanced thereby to secure the strength and rigidity of the cowl top structure 10.

Further, in this embodiment, openings 11c are provided in the side end parts 11b, for the purpose of protecting pedestrians, and an opening width of these openings 11c in the vertical direction, as seen from the front, is gradually increased (enlarged in width) toward the outside in the lateral direction of the vehicle, corresponding to an increase of the vertical width H1 of the side end parts 11b. As the results, when a shock is inputted to the side end parts of the cowl top structure 10 from the above, the cowl top upper 11 is deformed around the openings 11c, and the shock can be absorbed. In short, these openings 11c make the side end parts of the cowl top structure 10 easily deformable. As the results, in the cowl top structure 10 having the open sectional structure, it is possible to enhance shock absorbing performance in the side end parts 11b of the cowl top upper 11, in a state where the strength and rigidity of the cowl top upper 11 in the side end parts 11b are maintained. Therefore, it is possible to secure the strength and rigidity, and at the same time, to protect pedestrians, because of the shape of the cowl top upper 11 itself.

Further, in case where the cowl top upper 11 is seen from the above, an entirety of the cowl top upper 11 is in a shape of a crescent in which the center part is protruded frontward of the vehicle, positioning rear ends of the side end parts 11b as the rearmost ends of the crescent. In this case, in the side end parts 11b of the cowl top upper 11 at the both ends in the lateral direction of the vehicle, a width W1 in a longitudinal direction of the vehicle as seen from the above (hereinafter referred to as "a longitudinal width) is gradually decreased toward the outside in the lateral direction of the vehicle, so that the longitudinal width W1 is smaller than a longitudinal width W2 in the center part of the cowl top upper 11.

In this structure, the substantially entirety of the cowl top upper 11 is arranged more frontward of the vehicle than the welding point M between the cowl top upper 11 and the cowl top inner 12, and the open sectional structure is formed by combination of the cowl top upper 11 and the cowl top inner 12 (See Fig. 3 or so). Therefore, when a shock is inputted to the cowl top upper 11 from the above, this shock is exerted on the cowl top upper 11 as a bending moment, thus making the cowl top upper 11 easily deformable. Particularly, because the longitudinal width W2 in the center part of the cowl top upper 11 is enlarged, the shock is received in a wide area, which makes the cowl top upper 11 more easily deformable. In this manner, the shock absorbing performance in the center part of the cowl top structure 10 in the lateral direction of the vehicle is enhanced.

The center part of the cowl top structure 10 in the lateral direction of the vehicle is shown in section, in Fig. 5. The rear end of the cowl top upper 11 is welded to the upper end of the cowl top inner 12, while the front end of the cowl top upper 11 is not connected to any member. Then, the middle part of the cowl top inner 12 in the vertical direction is welded to the rear end of the cowl top lower 13. Specifically, the center part of the cowl top structure 10 in the lateral direction of the vehicle has the substantially same structure as the structure in the sectional view as seen from the arrow marks A-A, which is shown in Fig. 3 (the open sectional structure).

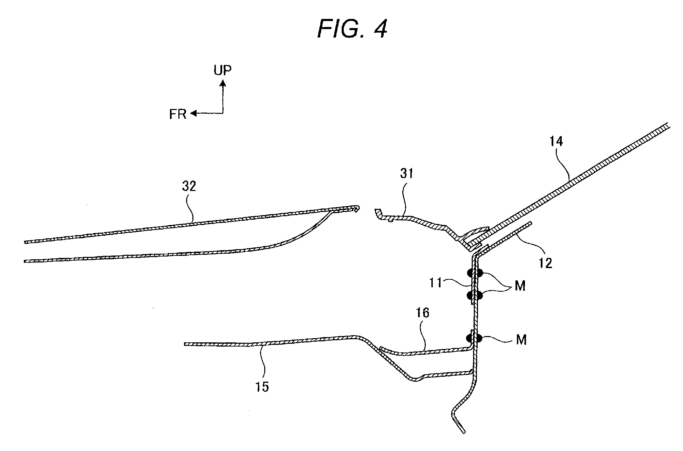

Then, referring to Fig. 4, the structure in the sectional view as seen from the arrow marks B-B in Fig. 2 will be described. In the most sideward end of the cowl top structure 10, the cowl top upper 11 and the cowl top inner 12 have the substantially same sectional shape, and are superposed on each other to be welded as a substantially integral plate. The wiper bracket side 16 for mounting a wiper (not shown) is welded to a middle part of the cowl top inner 12, and the frame extension 15 to be connected to the other member is welded to the cowl top inner 12 at a position below the wiper bracket side 16.

As described above, in the sectional view as seen from the arrow marks B-B, the cowl top upper 11 and the cowl top inner 12 are welded into a shape of an integral plate. This part is hardly deformed because of strength by welding, and hence, the strength and rigidity can be secured. On the other hand, in a region inward than the sectional view as seen from the arrow marks B-B, the cowl top upper 11 is protruded more frontward of the vehicle than the welding point M existing in this part, and therefore, the cowl top upper 11 can be easily deformed, when a shock is applied from the above.

In the sectional view of the center part of the cowl top structure 10, the cowl top upper 11, the cowl top inner 12, and the cowl top lower 13 are formed in the open sectional structure, which makes the cowl top structure 10 (the cowl top upper 11) easily deformable when a shock is applied from the above. In addition, the vertical width H2 of the cowl top upper 11 is made smaller, and the longitudinal width W2 is made larger in the center part, which also contributes to easiness of deformation. Further, in the both side end parts 11b of the cowl top upper 11 in the lateral direction of the vehicle, the vertical width H1 is gradually increased (enlarged in width) toward the outside in the lateral direction of the vehicle thereby to secure the strength and rigidity, while the openings 11c make the structure easily deformable with respect to an input such as a shock from the above. Moreover, the flange 11a which is provided in the front end part of the cowl top upper 11 also contributes to enhancement of the strength and rigidity.

As described hereinabove, according to the cowl top structure 10 of the invention, it is possible to secure the strength and rigidity of the entire structure with a simple structure, and to obtain an easily deformable structure with respect to a shock from the above, not only in the center part in the lateral direction of the vehicle and also in both the side end parts thereof. Accordingly, the strength and rigidity of the cowl top structure 10 can be secured, and at the same time, the pedestrian protecting performance can be ensured. It is to be noted that the cowl top side 56, the bulk head 57, and so on which are shown in Figs. 7 to 10 are unnecessary in this structure, and therefore, the number of the components required for this structure is reduced, resulting in reduction of the manufacturing cost and at the same time, in reduction of weight of the components.

The present invention is favorably applied to a cowl top structure of a vehicle.

## Claims

1. A cowl top structure (10) of a vehicle, the cowl top structure comprising:
a cowl top upper (11) which extends in a lateral direction of the vehicle and which is adapted to support a front window (14);
a cowl top lower (13) which extends in the lateral direction and which is arranged at a lower position than the cowl top upper (11); and
a cowl top inner (12) which extends in the lateral direction and which is welded to a rear end of the cowl top upper (11) and a rear end of the cowl top lower (13), so that the cowl top upper (11), the cowl top lower (13) and the cowl top inner (12) form an open sectional structure,
**characterized in that**
a width (H1) in a vertical direction of the vehicle of each of side end parts (11b) of the cowl top upper (11) in the lateral direction is gradually increased toward the outside in the lateral direction, and
each of the side end parts (11b) is formed with an opening (11c).

2. The cowl top structure (10) according to claim 1, **characterized in that**
an opening width of the opening in the vertical direction is gradually increased toward the outside in the lateral direction.

3. The cowl top structure (10) according to claim 1 or claim 2, **characterized in that**
a flange (11a) is provided at a front end of the cowl top upper (11) along an entire length thereof in the lateral direction.

4. The cowl top structure (10) according to claim 1 or claim 2, **characterized in that**
a center part of the cowl top upper (11) is protruded frontward of the vehicle, and
a width (W1) in a longitudinal direction of the vehicle of each of the side end parts (11b) is gradually decreased toward the outside in the lateral direction.

5. The cowl top structure (10) according to claim 4, **characterized in that**
the width (W1) in the longitudinal direction of each of the side end parts (11b) is smaller than a width (W2) in the longitudinal direction of the center part of the cowl top upper (11).

6. The cowl top structure (10) according to claim 3, **characterized in that**
a center part of the cowl top upper (11) is protruded frontward of the vehicle, and
a width (W1) in a longitudinal direction of the vehicle of each of the side end parts (11b) is gradually decreased toward the outside in the lateral direction.

7. The cowl top structure (10) according to claim 6, **characterized in that**
the width (W1) in the longitudinal direction of each of the side end parts (11b) is smaller than a width (W2) in the longitudinal direction of the center part of the cowl top upper (11).

## Patentansprüche

1. Windlaufstruktur (10) eines Fahrzeugs, wobei die Windlaufstruktur aufweist:
ein Windlauf-Oberteil (11), das sich in Seitenrichtung des Fahrzeugs erstreckt und das geeignet ist, eine Frontscheibe (14) zu stützen;
ein Windlauf-Unterteil (13), das sich in Seitenrichtung erstreckt und das an einer tieferen Position als das Windlauf-Oberteil (11) angeordnet ist; und
ein Windlauf-Innenteil (12), das sich in Seitenrichtung erstreckt und das mit einem hinteren Ende des Windlauf-Oberteils (11) und einem hinteren Ende des Windlauf-Unterteils (13) verschweißt ist, so dass das Windlauf-Oberteil (11), das Windlauf-Unterteil (13) und das Windlauf-Innenteil (12) eine offene Profilstruktur bilden,
**dadurch gekennzeichnet, dass**
eine in vertikaler Richtung des Fahrzeugs gemessene Breite (H1) jedes von Seitenendteilen (11b) des Windlauf-Oberteils (11) in Seitenrichtung zur Außenseite in Seitenrichtung allmählich zunimmt und
jedes der Seitenendteile (11b) mit einer Öffnung (11c) ausgebildet ist.

2. Windlaufstruktur (10) nach Anspruch 1, **dadurch gekennzeichnet, dass**
eine in vertikaler Richtung gemessene Öffnungsbreite der Öffnung zur Außenseite in Seitenrichtung allmählich zunimmt.

3. Windlaufstruktur (10) nach Anspruch 1 oder Anspruch 2, **dadurch gekennzeichnet, dass**
ein Flansch (11a) an einem vorderen Ende des Windlauf-Oberteils (11) über dessen Gesamtlänge in Seitenrichtung vorgesehen ist.

4. Windlaufstruktur (10) nach Anspruch 1 oder Anspruch 2, **dadurch gekennzeichnet, dass**
ein Mittelteil des Windlauf-Oberteils (11) vom Fahrzeug nach vom vorsteht und
eine in Längsrichtung des Fahrzeugs gemessene Breite (W1) jedes der Seitenendteile (11b) zur Außenseite in Seitenrichtung allmählich abnimmt.

5. Windlaufstruktur (10) nach Anspruch 4, **dadurch gekennzeichnet, dass**
die in Längsrichtung gemessene Breite (W1) jedes der Seitenendteile (11b) kleiner als eine in Längsrichtung gemessene Breite (W2) des Mittelteils des Windlauf-Oberteils (11) ist.

6. Windlaufstruktur (10) nach Anspruch 3, **dadurch gekennzeichnet, dass**
ein Mittelteil des Windlauf-Oberteils (11) vom Fahrzeug nach vorn vorsteht und eine in Längsrichtung des Fahrzeugs gemessene Breite (W1) jedes der Seitenendteile (11b) zur Außenseite in Seitenrichtung allmählich abnimmt.

7. Windlaufstruktur (10) nach Anspruch 6, **dadurch gekennzeichnet, dass**
die in Längsrichtung gemessene Breite (W1) jedes der Seitenendteile (11b) kleiner als eine in Längsrichtung gemessene Breite (W2) des Mittelteils des Windlauf-Oberteils (11) ist.

## Revendications

1. Structure de dessus d'auvent (10) d'un véhicule, la structure de dessus d'auvent comprenant :
une partie supérieure de dessus d'auvent (11) qui s'étend dans une direction latérale du véhicule et qui est adaptée pour supporter une vitre avant (14) ;
une partie inférieure de dessus d'auvent (13) qui s'étend dans la direction latérale et qui est agencée dans une position plus basse que la partie supérieure de dessus d'auvent (11) ; et
une partie interne de dessus d'auvent (12) qui s'étend dans la direction latérale et qui est soudée à une extrémité arrière de la partie supérieure de dessus d'auvent (11) et une extrémité arrière de la partie inférieure de dessus d'auvent (13), de sorte que la partie supérieure de dessus d'auvent (11), la partie inférieure de dessus d'auvent (13) et la partie interne de dessus d'auvent (12) forment une structure à section ouverte,
**caractérisée en ce que**
une largeur (H1) dans une direction verticale du véhicule de chacune des parties d'extrémité latérales (11b) de la partie supérieure de dessus d'auvent (11) dans la direction latérale est progressivement augmentée vers l'extérieur dans la direction latérale, et
chacune des parties d'extrémité latérales (11b) est formée avec une ouverture (11c).

2. Structure de dessus d'auvent (10) selon la revendication 1, **caractérisée en ce que**
une largeur d'ouverture de l'ouverture dans la direction verticale est progressivement augmentée vers l'extérieur dans la direction latérale.

3. Structure de dessus d'auvent (10) selon la revendication 1 ou la revendication 2, **caractérisée en ce que**
une bride (11a) est prévue au niveau d'une extrémité avant de la partie supérieure de dessus d'auvent (11) le long de toute sa longueur dans la direction latérale.

4. Structure de dessus d'auvent (10) selon la revendication 1 ou la revendication 2, **caractérisée en ce que**
une partie centrale de la partie supérieure de dessus d'auvent (11) fait saillie vers l'avant du véhicule, et
une largeur (W1) dans une direction longitudinale du véhicule de chacune des parties d'extrémité latérales (11b) est progressivement diminuée vers l'extérieur dans la direction latérale.

5. Structure de dessus d'auvent (10) selon la revendication 4, **caractérisée en ce que**
la largeur (W1) dans la direction longitudinale de chacune des parties d'extrémité latérales (11b) est inférieure à une largeur (W2) dans la direction longitudinale de la partie centrale de la partie supérieure de dessus d'auvent (11).

6. Structure de dessus d'auvent (10) selon la revendication 3, **caractérisée en ce que**
une partie centrale de la partie supérieure de dessus d'auvent (11) fait saillie vers l'avant du véhicule, et
une largeur (W1) dans une direction longitudinale du véhicule de chacune des parties d'extrémité latérales (11b) est progressivement diminuée vers l'extérieur dans la direction latérale.

7. Structure de dessus d'auvent (10) selon la revendication 6, **caractérisée en ce que**
la largeur (W1) dans la direction longitudinale de chacune des parties d'extrémité latérales (11b) est inférieure à une largeur (W2) dans la direction longitudinale de la partie centrale de la partie supérieure de dessus d'auvent (11).
